# EUROPEAN PATENT APPLICATION

(11) **EP 4 294 118 A1**
(43) Date of publication of application: **20.12.2023**
(21) Application number: 23179051.0
(22) Date of filing: 13.06.2023
(51) Int. Cl.: H04W 88/06, H04W 8/18, H04W 92/18

(54) **SYSTEMS INCLUDING HIGH-PERFORMANCE MODEMS COMBINED WITH LOW-PERFORMANCE MODEMS**

(30) Priority: 14.06.2022 US 202263351838 P
(71) Applicant: Molex CVS Hildesheim GmbH, 31135 Hildesheim (DE)
(72) Inventor: DORNBUSCH, Guido, Bochum (DE)
(74) Representative: Ter Meer Steinmeister & Partner

(57) **Abstract**

Exemplary embodiments are disclosed of systems including combinations of at least one or more high-performance modems and at least one or more low-performance modems. In exemplary embodiments, a system includes at least one high-performance or first modem (*e*.*g*., 5G modem, a cellular modem, other high-performance modem, *etc.)* and at least one low-performance or second modem (*e.g.,* IOT modem, a cellular modem, other low-performance modem, *etc*.). The high-performance and low-performance modems may be configured to share a SIM (subscriber identity or identification module), which may be a physical SIM, an embedded SIM (eSIM), or an integrated SIM (iSIM). The SIM may be dynamically switched between the high-performance and low-performance modems. Alternativly, the high-performance and low-performance modems may each include or be provided with its own dedicated SIM, which may be a physical SIM, an eSIM, or an iSIM.

## Description

### RELATED APPLICATION

This application claims priority to U.S Provisional Patent Application Serial Number 63/351,838 filed June 14, 2022, which is incorporated herein by reference in its entirety.

### TECHNICAL FIELD

This disclosure generally relates to systems including combinations of at least one or more high-performance modems and at least one or more low-performance modems.

### DESCRIPTION OF RELATED ART

As motor vehicles become more data driven, the need to communicate with the external world becomes increasingly important. Individuals in vehicles often rely on personal mobile devices for streaming of music, communication with others, and even navigation. The motor vehicles themselves can also be in contact with external systems. Such communication allows for over-the-air updates from a central server, information about external conditions relevant to the vehicle through vehicle to everything (V2X) communication, navigational information, sensor sharing, and high accuracy positioning. If the vehicle is intended to have autonomous driving features, then having the ability to provide sensed data to a central server can allow for receipt of improved driving algorithms. Thus, there are numerous reasons for providing data to and from a motor vehicle as well as directly between vehicles, vehicles and vulnerable road users, like pedestrians and cyclists, vehicles and infrastructure, such as traffic lights. Other reasons for providing data to and from a motor vehicle include for entertainment/streaming in an autonomous vehicle and for using an autonomous vehicle as a mobile office to work, which data communications preferably are provided at a very high data rate and availability without any interruptions. V2X will also be required for zero-accident autonomous vehicles.

As vehicles increase the number of antennas, however, this creates a more complicated system and packaging these antennas will become more of a challenge - considering the design requirements will enforce hiding antennas and combining them for different technologies and use-cases. For example, if V2X and regular cellular communication between a vehicle and network is desired, two to four antennas may be used for 5G and LTE cellular communications, and one or two antennas may be dedicated to V2X. For optimal performance, the antenna systems are mounted in spaced apart locations that provide a full 360° surround view. As the operation of the communication system will be important for the future of autonomous and connected vehicles, further improvements in vehicular communication systems are required.

### SUMMARY

This section provides a general summary of the disclosure and is not a comprehensive disclosure of its full scope or all of its features.

Exemplary embodiments are disclosed of systems including combinations of at least one or more high-performance modems and at least one or more low-performance modems. In exemplary embodiments, a system includes at least one high-performance or first modem (*e.g*., 5G modem, a cellular modem, other high-performance modem, *etc.*) and at least one low-performance or second modem (*e.g*., IOT modem, a cellular modem, other low-performance modem, *etc.*)*.* The high-performance and low-performance modems may be configured to share a SIM (subscriber identity or identification module), which may be a physical SIM, an embedded SIM (eSIM), or an integrated SIM (iSIM). The SIM may be dynamically switched between the high-performance and low-performance modems. Alternativly, the high-performance and low-performance modems may each include or be provided with its own dedicated SIM, which may be a physical SIM, an eSIM, or an iSIM.

In an exemplary embodiment, the high-performance and low-performance modems may be provided on the same silicon substrate or package of a printed circuit board (PCB). Or, for example, a multichip package or multichip module may include the high-performance and low-performance modems.

In another exemplary embodiment, the high-performance and low-performance modems may be spaced apart from each other on the same PCB. In a further exemplary embodiment, the at least one high-performance or first modem may be on a first PCB, and the at least one low-performance or second modem may be on a second PCB. In yet another exemplary embodiment, a distributed antenna system (*e.g*., a vehicular distributed antenna system (vDAS), *etc.*) may be configured to be operable as at least one high-performance or first modem, and one or more of the active antennas of the distributed antenna system may be configured to be operable as and/or include one or more low-performance or second modems.

Further areas of applicability will become apparent from the description provided herein. The description and specific examples in this summary are intended for purposes of illustration only and are not intended to limit the scope of the present disclosure.

### DRAWINGS

The present application is illustrated by way of example and not limited in the accompanying figures in which like reference numerals indicate similar elements and in which:
FIG. 1 illustrates a system including a high-performance or first modem (*e.g.,* 5G modem, *etc.*) and a low-performance or second modem (*e.g.,* IOT modem, *etc.*) provided on the same silicon substrate or package of a printed circuit board (PCB) or a multichip package or multichip module according to an exemplary embodiment of the present disclosure.
FIG. 2 illustrates a system including a high-performance or first modem (*e.g.,* 5G modem, *etc.*) and a low-performance or second modem (*e.g.,* IOT modem, *etc.*) spaced apart from each other on the same PCB according to an exemplary embodiment of the present disclosure.
FIG. 3 illustrates a system including a high-performance or first modem (*e.g.,* 5G modem, *etc.*) on a first PCB and a low-performance or second modem (*e.g.,* IOT modem, *etc.*) on a second PCB according to an exemplary embodiment of the present disclosure.
FIG. 4 is a block diagram of a distributed antenna system including multiple active antennas in communication with a central compute unit. The distributed antenna system is configured to be operable as a high-performance or first modem (*e.g.,* a 5G modem, *etc.*) according to an exemplary embodiment of the present disclosure.
FIG. 5 is a block diagram of an active antenna, which may be used in the distributed antenna system shown in FIG. 4 according to an exemplary embodiment of the present disclosure.
FIG. 6 is a block diagram of an active antenna including eCall, which may be used in the distributed antenna system shown in FIG. 4 according to an exemplary embodiment of the present disclosure.
FIG. 7 is a block diagram of the distributed antenna system shown in FIG. 4 and illustrating that one of the active antennas is configured to be operable as and/or includes a low-performance or second modem (*e.g.,* an IOT modem, *etc.*) according to an exemplary embodiment of the present disclosure.
FIG. 8 illustrates the distributed antenna system shown in FIG. 7 installed within an example vehicle according to an exemplary embodiment of the present disclosure.

### DETAILED DESCRIPTION

The detailed description that follows describes exemplary embodiments and the features disclosed are not intended to be limited to the expressly disclosed combination(s). Therefore, unless otherwise noted, features disclosed herein may be combined together to form additional combinations that were not otherwise shown for purposes of brevity.

In a vehicular distributed antenna system (vDAS), multiple antennas may be distributed around a vehicle to create separation between the antenna elements. The antenna separation helps counteract shadowing effects and supports antenna diversity algorithms and MIMO (Multiple Input Multiple Output) and allows the combination of use-cases like 5G-base station communication and V2V with full surround view. Separating the antennas to different locations also allows for a better line of sight view to base stations or other vehicles by eliminating shadowing effect of the vehicle itself and/or nearby obstructions.

But as recognized herein, further improvements in energy efficiency are needed for vehicular distributed antenna systems to fulfill power and eCall requirements and for eCall redundancy and availability as eCall needs to reliably withstand or "survive" accident. As also recognized herein, a relativly small/local eCall entity is easier to protect and to supply with back-up power (*e.g.*, dedicated battery). Accordingly, exemplary embodiments of systems were developed and/or are disclosed herein that include combinations of at least one or more high-performance or first modems and at least one or more low-performance or second modems. The high-performance or first modem(s) may be a 5G modem, eMBB (enhanced Mobile Broadband) modem, a vDAS (vehicular distributed antenna system), other high-performance cellular modem, other high bandwidth modem, other modem having a higher performance than the low-performance or second modem(s), *etc.* The low-performance or second modem(s) may be a low power modem, such as an IOT (Internet of Things) modem, low power cellular modem, other modem having a lower performance than the high-performance modem(s), *etc.*

In exemplary embodiments disclosed herein, the combination of at least one high-performance modem (broadly, at least one first modem) with at least one low-performance modem (broadly, at least one second modem) may provide or include one or more (but not necessarily any or all) of the following advantageous effects or features, such as improved voice capability and/or energy efficiency for a vehicular distributed antenna system (vDAS) or other system that includes the combination of high-performance and low-performance modems. The high-performance modem/low-performance modem combination may be configured for standby connection in a parked vehicle, to support the wake of the vehicle for execution of use-cases (*e.g.*, Table 1 below, *etc.*)*,* and/or provide a robust eCall subsystem. The robust eCall subsystem may be configured to provide eCall in case of crash/accident/vehicle damage (*e.g*., eCall triggered by airbag deployment, *etc.*) and/or manual eCall via vDAS, *etc.*

In exemplary embodiments, the high-performance modem/low-performance modem combination may be configured such that the modem combination visually appears to be a single modem from the outside. By way of example, the high-performance/low-performance modems may be provided in one silicon chipset. Or, for example, the high-performance modem may comprise a vehicular distributed antenna system (vDAS) in communication with the second/low-performance modem. The high-performance/low-performance modems may be configured such that a SIM (subscriber identity or identification module) is shared or switched between the modems. The SIM may be a physical SIM, an embedded SIM (eSIM), or an integrated SIM (iSIM) (*e.g.,* a SIM integrated to the silicon of a baseband processor, *etc.*)*.* The SIM may be shared between the modems via a remote SIM interface, a SIM switch, BT-rSAP (Bluetooth Remote SIM Access Profile), *etc.* By default, the SIM may be connected to the low-performance modem (*e.g.,* IOT modem, *etc.*)*.* Per software protocol, the SIM may be switched or shared to the high-performance modem. Alternativly, the high-performance modem and the low-performance modem may each include or be provided with its own dedicated SIM, which may be a physical SIM, an embedded SIM (eSIM), or an integrated SIM (iSIM).

In exemplary embodiments, an IOT modem (broadly, a second or low-performance modem) may be configured to activate an eMBB URLL and/or 4x4 LTE modem(s) (broadly, a first or high-performance modem). MIMO (Multiple Input Multiple Output) is needed for eMBB and may be preferred for URLL, *e.g.,* for broadband or URLL (Ultra Reliable Low Latency Communications) for V2X application, *etc.* The main 5G use areas are combined here. This helps to ensure coverage for a parked vehicle and eCall and high data rates in other cases as well as low data rate use-cases in an energy efficient way.

In exemplary embodiments, data may be collected via the second or low-performance modem (*e.g.,* IOT modem, *etc.*)*.* After the data collection, the first or high-performance modem (*e.g.,* broadband modem, high bandwidth modem, *etc.*) may be enabled in certain areas for data offloading or similar functions.

In exemplary embodiments, the second or low-performance modem (*e.g.,* IOT modem, *etc.*) is configured to trigger the first or high-performance modem(s) (*e.g.*, eMBB URLL modem, 4x4 LTE modem, other high bandwidth modem, *etc.*) to take over for high data use-cases. Exemplary embodiments may be configured to enable high bandwidth data dump on events, which allows the second or low-performance modem (*e.g.,* IOT modem, *etc.*) to remotely receive the triggering instructions to trigger the first or high-performance modem from a remote device (*e.g.,* a smartphone or other User Equipment (UE), *etc.*)*.* In turn, this may allow for reduced overall power consumption not only for a parked car but as well while driving, which reduced power consumption may be especially advantageous for electrical vehicles.

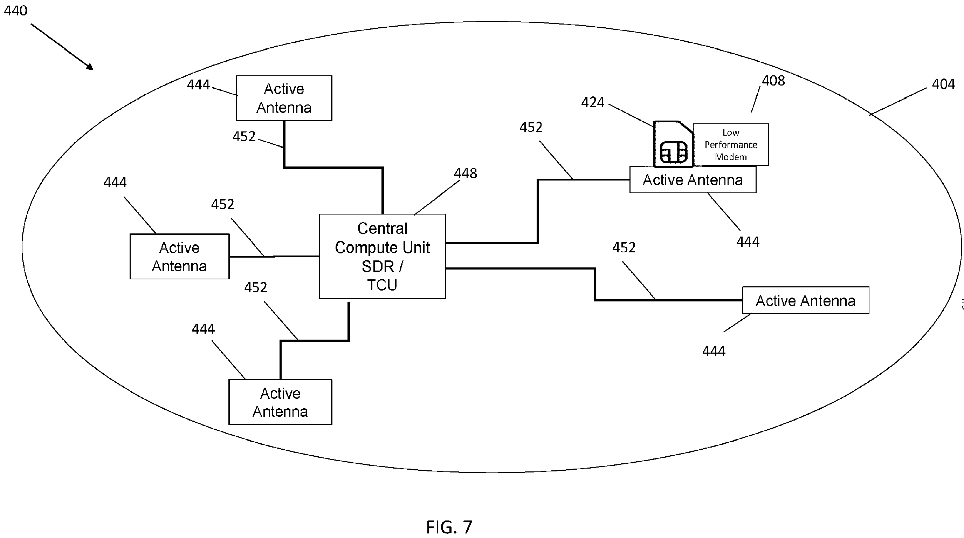

In exemplary embodiments, the first or high-performance modem may comprise a vehicular distributed antenna system (vDAS) including multiple active antennas as shown in FIG. 7. The second or low-performance modem may be provided or included in one or more of the vDAS active antennas.

In exemplary embodiments, the first or high-performance modem and second or low-performance modem may be configured to share one or more antenna(s) (*e.g.*, via switching, *etc.*) Additionally, or alternatively, each modem may have its own separate or independent one or more antenna(s).

In exemplary embodiments, the second or low-performance modem (*e.g.,* IOT modem, *etc.*) may be configured to be always on with a low power consumption (*e.g.*, 1 milliamp (mA) or less, *etc.*). The low power consumption by the second or low-performance modem avoids draining the vehicle battery over time and/or enables the use of solar and/or a supercapacitor for powering the second modem. By way of example, the second or low performance modem may include its own battery (*e.g*., microcell, *etc.*)*,* which may be rechargeable via the vehicle's alternator, via solar, *etc.* By comparison to the low power consumption by the second or low-performance modem, the first or high-performance modem may have a considerably higher power consumption. For example, the first or high-performance modem may comprise a vDAS system having a power consumption of at least a few amps or more as compared to a power consumption of 1 mA or less by the second or low-performance modem.

For Dual Sim Dual Active (DSDA), exemplary embodiments may be configured such that one SIM is switched for vehicle use cases in a parked vehicle. Exemplary embodiments may be configured for use with stolen vehicle tracking (SVT) and include local GNSS (global navigation satellite system).

In exemplary embodiments, the high-performance modem/low-performance modem combination may enable V2V communication in "parked" car, *e.g.,* "car-break-down" warning, *etc.* In such exemplary embodiments, the low-performance modem may be configured to trigger the V2X capability of the high-performance modem. In exemplary embodiments, the high-performance modem/low-performance modem combination may be configured to be operable with features and/or for execution of use cases set forth below in Table 1.

**Table 1 - Use Case Focus and Use Case Specific Partitioning**

| **Low-Performance Modem** | **High-Performance Modem/vDAS** |
|---|---|
| Active in Parked Car - Always Online (Reach lowest power consumption) | Active in Driving Use-Cases (Higher power consumption accepted) |
| Enables low data rate use-cases even when driving | Enables High data rates use-cases |
| No V2X Support | Enables V2X support |
| Vehicle Wake Support/Dispatcher via cellular network in parking use-cases for service execution - always online | Vehicle Wake Support: Not Applicable (NA) |
| Always On in Parking Car - only via Vehicle SIM card | User SIM for Free In-Vehicle Internet as well Vehicle SIM via second software defined radio (SDR) or Dual Sim Dual Active (DSDA) |
| Usage of one Antenna or Dual Antennas for 4G and 5G | Many/All antennas (*e.g.,* 4, 6, or 8 vDAS antennas) in use for high-performance and multi Modem use-cases |
| Enables Dispatcher/Wake (parking) or simple low data rate use-cases only *e.g*., unlock | Connected to "full" Telematics Software Stack, Vehicle Internet via Wi-Fi/Ethernet |
| Supports Robust eCall in case of accident/vehicle damage (*e.g.*, airbag triggered) | Manual Triggered eCall optional Airbag triggered eCall optional on "small impact" - no damage detected |

In exemplary embodiments, the first/high-performance modem may be a modem that is eMBB (enhanced Mobile Broadband) driven optionally with C-V2X URLLC (ultra reliable low latency communications). The first/high-performance modem may be configured for targeting wideband eMBB use cases in handsets and CPE/FWA terminals and mmWave, as well as URLLC enabled AR/VR and C-V2X use cases.

In exemplary embodiments, the second/low-performance modem may be a modem that is IOT (Internet of Things) driven optionally with support for audio for eCall use-cases. The second/low-performance modem may be configured for supporting a range of reduced capability use cases, *e.g.,* LTE Cat1, to future 3GPP Rel-17/18 NR RedCap (Reduced capability, aka NR-Lite). The second/low-performance modem may be configured to be an extremely efficient and lean baseband implementation with complete processing chain acceleration and utilizing a small footprint digital signal processing (DSP) controller, *e.g.,* to meet the most stringent power budgets. The second/low-performance modem may be configured for optimized RF with power efficient power amplifiers.

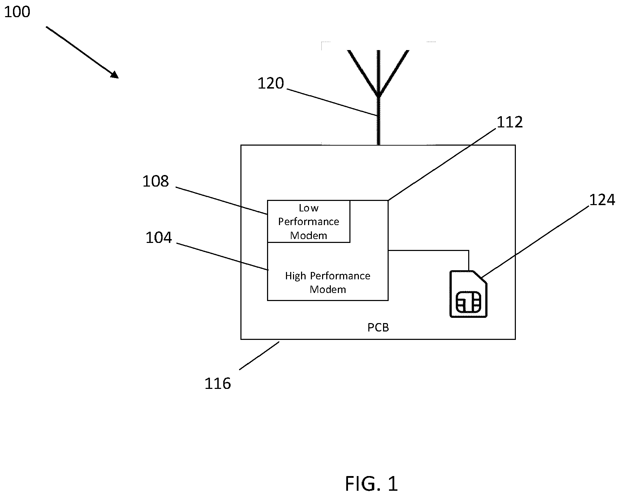

With reference to the figures, FIG. 1 illustrates an exemplary embodiment of a system 100 including a first or high-performance modem 104 (*e.g.,* 5G modem, *etc.*) and a second or low-performance modem 108 (*e.g.,* IOT modem, *etc.*)*.* Although FIG. 1 illustrates a single high-performance modem 104 and a single low-performance modem 108, other exemplary embodiments may include more than one high-performance modem and/or more than one low-performance modem.

The high-performance modem 104 and the low-performance modem 108 are combined such that the modem combination visually appears to be a single modem from the outside. In this exemplary embodiment, the high-performance modem 104 and the low-performance modem 108 are collocated or provided on the same silicon substrate or package 112 of a printed circuit board (PCB) 116. Or, for example, a multichip package or multichip module may include the high-performance modem 104 and the low-performance modem 108.

The high-performance modem 104 and the low-performance modem 108 are configured to share a SIM 124, which may be a physical SIM, an embedded SIM (eSIM), or an integrated SIM (iSIM). The SIM 124 may be dynamically switched between the high-performance modem 104 and the low-performance modem 108. Alternativly, the high-performance modem 104 and the low-performance modem 108 may each include or be provided with its own dedicated SIM, which may be a physical SIM, an embedded SIM (eSIM), or an integrated SIM (iSIM). The SIM 124 may be configured to store network-specific information used to authenticate and identify subscribers on the network, including ICCID, IMSI, authentication key (Ki), local area identity (LAI), and operator-specific emergency number. The SIM 124 may also be configured to store other carrier-specific data such as the SMSC (Short Message service center) number, service provider name (SPN), service dialing numbers (SDN), advice-of-charge parameters and value-added service (VAS) applications.

In this exemplary embodiment, the high-performance modem 104 and low-performance modem 108 are configured to share the antenna(s) 120, *e.g.,* via dynamic switching of the SIM 124, *etc.* Additionally, or alternatively, the high-performance modem 104 and low-performance modem 108 may each have its own one or more independent antennas. Although FIG. 1 shows a single antenna 120, the high-performance modem 104 and the low-performance modem 108 may be configured to share more than one antenna in other exemplary embodiments.

In this exemplary embodiment, the high-performance modem 104 and low-performance modem 108 are configured to share the SIM 124 that is dynamically switched between the two modems 104, 108. By default, the SIM 124 is connected to the low-performance modem 108. Per software protocol, the SIM 124 is dynamically switched from the low-performance modem 108 to the high-performance modem 104, *e.g.,* via remote SIM as used in BT-rSAP, *etc.*

In this example, the low-performance modem 108 may be operable with and use one antenna. And the high-performance modem 104 may be operable with and use multiple antennas, e.g., eMBB 5G may use four antennas or two antennas for automotive, *etc.* FIG. 1 shows a 5G modem and an IOT modem as examples of a first/high-performance modem and a second/low-performance modem, respectively. Other exemplary embodiments may be configured differently, *e.g.,* with a different type of first/high-performance modem (*e.g.*, vDAS, *etc.*) other than a 5G modem and/or a different type of second/low-performance modem other than an IOT modem, *etc.*

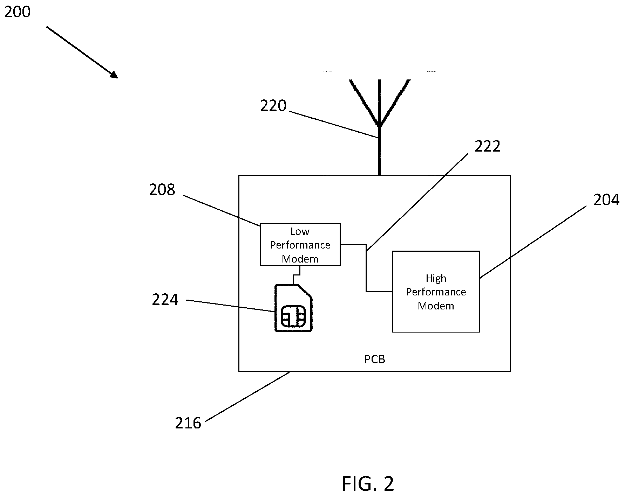

FIG. 2 illustrates an exemplary embodiment of a system 200 including a first or high-performance modem 204 ( *e.g.,* a 5G modem, *etc.*) and second or low-performance modem 208 ( *e.g.,* an IOT modem, *etc.*)*.* Although FIG. 2 illustrates a single high-performance modem 204 and a single low-performance modem 208, other exemplary embodiments may include more than one high-performance modem and/or more than one low-performance modem.

The high-performance modem 204 and the low-performance modem 208 are combined such that the modem combination visually appears to be a single modem from the outside. In this exemplary embodiment, the high-performance modem 204 and the low-performance modem 208 are collocated or provided on the same printed circuit board (PCB) 216. The high-performance modem 204 and low-performance modem 208 are spaced apart from each other on the PCB 216. The high-performance modem 204 and low-performance modem 208 are in communication with each other via communication link 222. The communication link 222 may carry power management information like wake/sleep, status change, SIM interface, potentially network related information, *etc.*

The high-performance modem 204 and the low-performance modem 208 are configured to share a SIM 224, which may be a physical SIM, an embedded SIM (eSIM), or an integrated SIM (iSIM). The SIM 224 may be dynamically switched between the high-performance modem 204 and the low-performance modem 208. Alternativly, the high-performance modem 204 and the low-performance modem 208 may each include or be provided with its own dedicated SIM, which may be a physical SIM, an embedded SIM (eSIM), or an integrated SIM (iSIM). The SIM 224 may be configured to store network-specific information used to authenticate and identify subscribers on the network, including ICCID, IMSI, authentication key (Ki), local area identity (LAI), and operator-specific emergency number. The SIM 224 may also be configured to store other carrier-specific data such as the SMSC (Short Message service center) number, service provider name (SPN), service dialing numbers (SDN), advice-of-charge parameters and value-added service (VAS) applications.

The high-performance modem 204 and low-performance modem 208 are configured to share the antenna(s) 220, *e.g*., via dynamic switching of the SIM 224, *etc.* Additionally, or alternatively, the high-performance modem 204 and low-performance modem 208 may each have its own one or more independent antennas. Although FIG. 2 shows a single antenna 220, the high-performance modem 204 and the low-performance modem 208 may be configured to share more than one antenna in other exemplary embodiments.

In this exemplary embodiment, the high-performance modem 204 and low-performance modem 208 are configured to share the SIM 224 that is dynamically switched between the two modems 204, 208. By default, the SIM 224 is connected to the low-performance modem 208. Per software protocol, the SIM 224 is dynamically switched from the low-performance modem 208 to the high-performance modem 204, *e.g.,* via remote SIM as used in BT-rSAP, *etc.*

In this example, the low-performance modem 208 may be operable with and use one antenna. And the high-performance modem 204 may be operable with and use multiple antennas, *e.g*., eMBB 5G may use four antennas or two antennas for automotive, *etc.* FIG. 2 shows a 5G modem and an IOT modem as examples of a first/high-performance modem and a second/low-performance modem, respectively. Other exemplary embodiments may be configured differently, *e.g.,* with a different type of first/high-performance modem (*e.g.*, vDAS, *etc.*) other than a 5G modem and/or a different type of second/low-performance modem other than an IOT modem, *etc.*

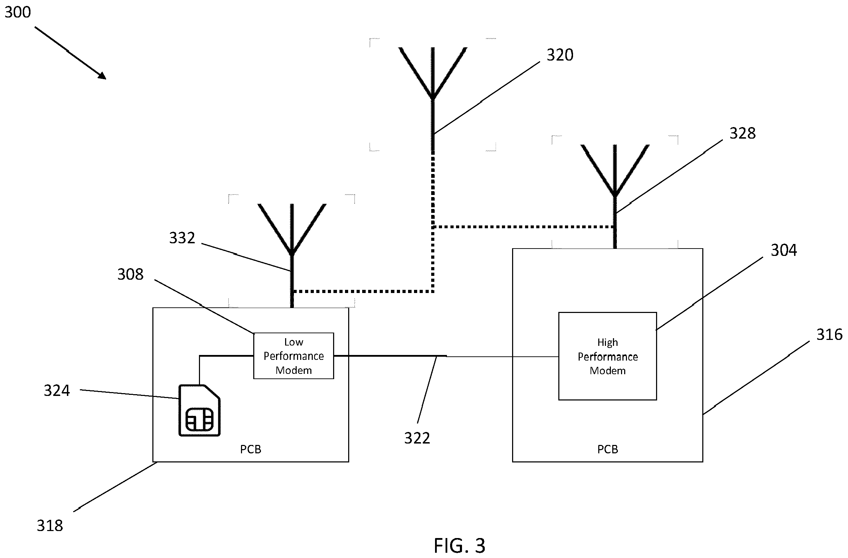

FIG. 3 illustrates an exemplary embodiment of a system 300 including a first or high-performance modem 304 ( *e.g.*, a 5G modem, *etc.*) and a second or low-performance modem 308 ( *e.g*., an IOT modem, *etc.*)*.* Although FIG. 3 illustrates a single high-performance modem 304 and a single low-performance modem 308, other exemplary embodiments may include more than one high-performance modem and/or more than one low-performance modem.

In this exemplary embodiment, the high-performance modem 304 and the low-performance modem 308 are provided on different first and second printed circuit boards 316, 318, respectively. The high-performance modem 304 and low-performance modem 308 are in communication with each other via a communication link 322. The communication link 322 may carry power management information like wake/sleep, status change, SIM interface, potentially network related information, *etc.*

The high-performance modem 304 and the low-performance modem 308 are configured to share a SIM 324, which may be a physical SIM, an embedded SIM (eSIM), or an integrated SIM (iSIM). The SIM 324 may be dynamically switched between the high-performance modem 304 and the low-performance modem 308. Alternativly, the high-performance modem 304 and the low-performance modem 308 may each include or be provided with its own dedicated SIM, which may be a physical SIM, an embedded SIM (eSIM), or an integrated SIM (iSIM). The SIM 324 may be configured to store network-specific information used to authenticate and identify subscribers on the network, including ICCID, IMSI, authentication key (Ki), local area identity (LAI), and operator-specific emergency number. The SIM 324 may also be configured to store other carrier-specific data such as the SMSC (Short Message service center) number, service provider name (SPN), service dialing numbers (SDN), advice-of-charge parameters and value-added service (VAS) applications.

In this exemplary embodiment, each of the high-performance modem 304 and low-performance modem 308 has its own independent antenna(s) 328, 332, respectively. Additionally, or alternatively, the high-performance modem 304 and low-performance modem 308 may also be configured to share the antenna(s) 320 via dynamic switching of the SIM 324, *e.g.*, via dynamic switching of the SIM 324, *etc.* Although FIG. 3 shows a single shared antenna 320, the high-performance modem 304 and the low-performance modem 308 may be configured to share more than one antenna in other exemplary embodiments.

In this exemplary embodiment, the high-performance modem 304 and low-performance modem 308 are configured to share the SIM 324 that is dynamically switched between the two modems 304, 308. By default, the SIM 324 is connected to the low-performance modem 308. Per software protocol, the SIM 324 is dynamically switched from the low-performance modem 308 to the high-performance modem 304, *e.g.,* via remote SIM as used in BT-rSAP, *etc.*

In this example, the low-performance modem 308 may be operable with and use one antenna. And the high-performance modem 304 may be operable with and use multiple antennas, *e.g*., eMBB 5G may use four antennas or two antennas for automotive, *etc.* FIG. 3 shows a 5G modem and an IOT modem as examples of a first/high-performance modem and a second/low-performance modem, respectively. Other exemplary embodiments may be configured differently, *e.g.,* with a different type of first/high-performance modem (*e.g.*, vDAS, *etc.*) other than a 5G modem and/or a different type of second/low-performance modem other than an IOT modem, *etc.*

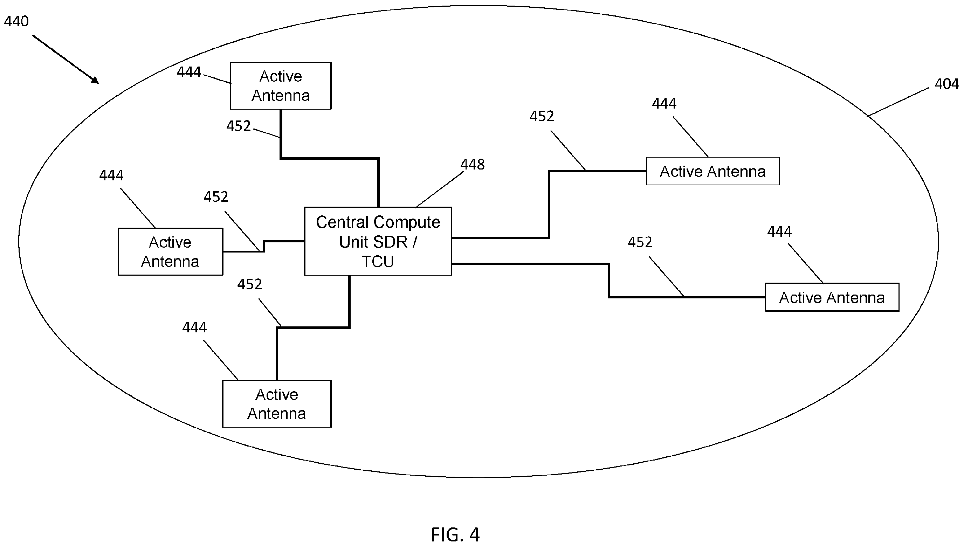

FIG. 4 illustrates an exemplary embodiment of a distributed antenna system 440 including multiple active antennas 444 in communication with a central compute unit 448 via links 452. The central compute unit 448 may include one or more software defined radio (SDR) instances and a TCU (telematic control unit).

The distributed antenna system 440 is configured to be operable as a first or high-performance modem 404 (*e.g.,* a 5G modem, *etc.*) according to an exemplary embodiment. In this exemplary embodiment, the active antennas 444 are the digital/analog antennas of a main modem implemented in the central compute unit 448 as an SDR (Software Defined Radio) or using a modem baseband (BB) processor, device, or chip. The modem may have two or more MIMO antennas connected via analog RF and/or via an analog to digital (A/D) digital link and digital to analog (D/A) connection, *etc.*

With continued reference to FIG. 4, the links 452 directly connect the active antennas 444 to the central compute unit 448. In other exemplary embodiments, the active antennas 444 may be connected to the central compute unit 448 via one or more switches. For example, the central compute unit 448 may be in communication with the active antennas 444 via an In-Vehicle Network (IVN). The In-Vehicle Network may comprise one or more digital links (*e.g.*, an Ethernet network or some other protocol) including one or more switches and different links can have different link data rates. In which case, communications between the active antennas 444 and the central compute unit 448 may be routed independently and dynamically via the In-Vehicle Network. Alternative PHY layers other than Ethernet may also be suitable, such as SerDes, MIPI A-PHY ASA, *etc.*

The distributed antenna system 440 is configured such that the active antennas 444 and central compute unit 448 (*e.g.,* SDR instance(s), *etc.*) communicate digitally. Accordingly, the links 452 between the active antennas 444 and the central compute unit 448 are digital links preferably with relatively high bandwidth, *e.g*., that are suitable for 5G eMBB / URLLC, V2X / RF BW MIMO, 25 Gb Automotive Ethernet, *etc.* In other embodiments, the links 452 may comprise 10 Gbps-Ethernet digital links or other digital links higher or lower than 10 Gbps, *etc.* For example, each link 452 may be operable for supporting 10 Gbps of bandwidth or higher (*e.g.*, 10 Gbps, 25 Gbps, *etc.*) between the central compute unit 448 and the corresponding one or more of the active antennas 444.

The central compute unit 448 may include software including one or more software defined radio (SDR) instances. The antennas 444 may be sharable by the one or more SDR instance(s). The one or more SDR instances may comprise or be configured to be operable as a high-performance modem for cellular, V2X, Wi-Fi, GPS, *etc.* The one or more SDR instances may include one SDR instance for OEM (original equipment manufacturer) and one SDR for the consumer/end user running on a vehicular compute node (*e.g.*, central controller, zonal controller, *etc.*)*.* There may be multiple "virtual" SDR instances in a central compute. An SDR may share SIM (subscriber identification module) info with an end user's mobile device (*e.g.*, cell phone, *etc.*) such that the SDR and mobile device may share the same SIM and increase (*e*.*g.*, double, *etc.*) the possible data rate.

The active antennas 444 may include one or more antenna elements configured to be operable with GPS, Wi-Fi, Bluetooth, other wireless connectivity, *etc.* For example, each active antenna 444 may include two transmit (TX) antenna elements and two receive (RX) antenna elements. But the active antennas 444 may be configured differently, *e.g*., with more or less than two TX antennas, more or less than two RX antennas, with antennas elements configured to be operable with GPS, Wi-Fi, 5G FR1, 5G FR2, other wireless connectivity, *etc.* Accordingly, exemplary embodiments disclosed herein should not be limited to antennas 444 having any particular number of antenna elements configured for any specific frequency range.

Each active antenna 444 may be identical to each other and include the same or similar components, although this is not required for all exemplary embodiments. For the illustrated embodiment shown in FIG. 4, the five active antennas 444 will be described together for brevity.

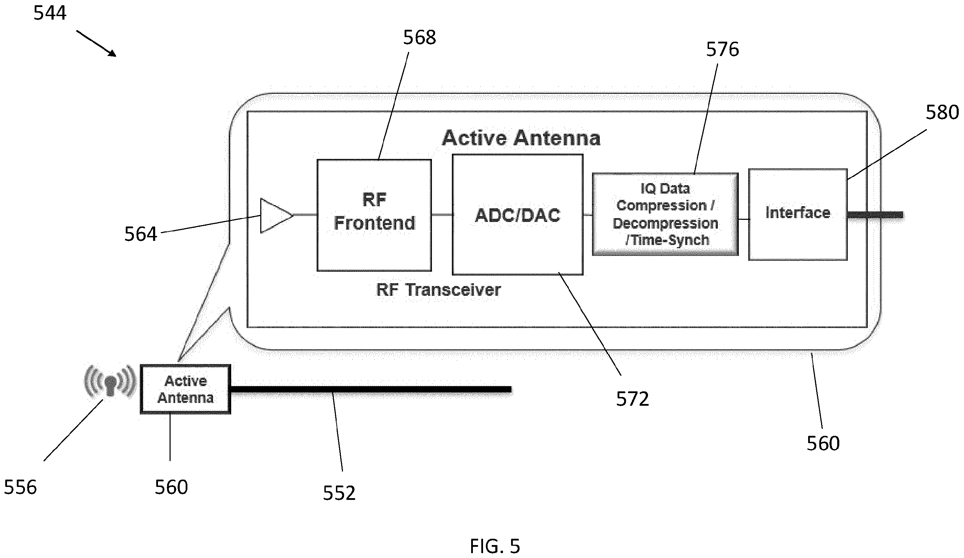

FIG. 5 illustrates an active antenna 544 that may be used in the distributed antenna system 440 shown in FIG. 4. The active antenna 544 includes an antenna 556 and an active antenna electronic 560. The active antenna electronic 560 includes an antenna connectivity 564 as part of the RF front end module (FEM) 568, an analog to digital converter/digital to analog converter (ADC/DAC) 572, IQ Data Compression/Decompression and Time Synchronization module 576 (*e.g*., algorithms, *etc.*)*,* and a high speed digital link interface 580 (*e.g*., 10Gbps-Ethernet channel, 25Gbps-Ethernet channel, or other desirable protocol for supporting suitable data rates). The RF front end module (FEM) 568 may include a power amplifier for transmission and a low-noise amplifier for reception.

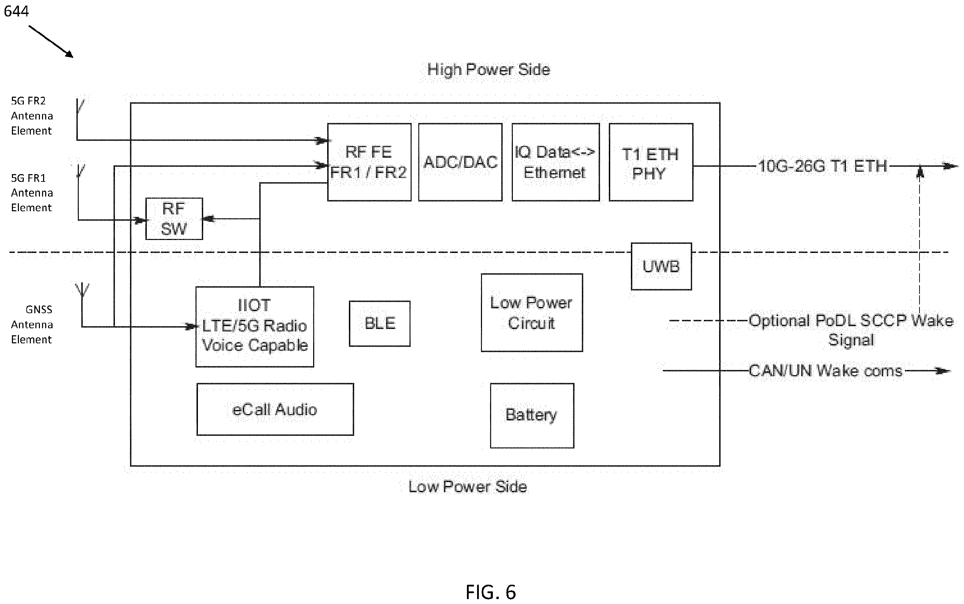

FIG. 6 illustrates an active antenna 644 including eCall, which may be used in the distributed antenna system 440 shown in FIG. 4. The active antenna 644 includes a 5G FR1 antenna element, a 5G FR2 antenna element, and a GNSS (*e.g.,* GPS, *etc.*) antenna element. A high power side of the antenna 644 includes a radio frequency switch (RF SW), an RF front end (FE) module, an analog to digital converter/digital to analog converter (ADC/DAC), IQ Data Framer/Deframer (*e.g*., IQ Data Compression/Decompression and Time Synchronization module, *etc.*)*,* and a high speed digital link interface (*e.g.*, 10Gbps-Ethernet channel, 25Gbps-Ethernet channel, or other desirable protocol for supporting suitable data rates). The RF front end module may include a power amplifier for transmission and a low-noise amplifier for reception. A low power side of the antenna 644 is configured with or includes eCall Audio, IIOT LT/5G Radio Voice Capable module, Bluetooth Low Energy (BLE), a low power circuit, a battery, and ultrawide band (UWB). Also shown in FIG. 6 are CAN/LIN (controller area network/local interconnect network) wake communications and optional PoDL (Power-over-Data-Lines) SCCP (Serial Communication Classification Protocol) wake signal.

Although the distributed antenna system 440 is illustrated in FIG. 4 with five active antennas 444, other exemplary embodiments may include more or less than five active antennas, *e.g*., depending on the configuration of the vehicle (*e.g.*, vehicle type, size, shape, *etc.*) in which the distributed antenna system 440 will be installed. The distributed antenna system 440 may be configured for 5G/6G with optimal MIMO performance and full surround view for high bandwidth V2N/V2X applications. The system may include a vehicle NAD SDR, Consumer Network Access Device (NAD) SDR, and a relay/Mobile IAB (infrastructure and backhaul). The system may be configured for targeting 5G FR1 (*e.g.,* 410 MHz to 7.125 GHz) and 5G FR2 (*e.g.,* 24 GHz to 52.6 GHz, 71 GHz, or higher) frequency ranges. But exemplary embodiments disclosed herein are not limited to any specific frequency range(s). Other exemplary embodiments may be configured for other frequency range(s) (*e.g.*, GPS, Wi-Fi, Bluetooth, other wireless connectivity, *etc.*) and/or configured with a distribution of antennas including mmWave Phased arrays or Sub 6G antenna elements.

As shown in FIG. 7, one or more of the active antennas 444 of the distributed antenna system 440 (FIG. 4) may be configured to be operable as and/or include a second or low-performance modem 408. Accordingly, this exemplary embodiment includes a combination of high-performance/low-performance modems as the distributed antenna system 440 is operable as a high-performance modem 404 (*e.g.,* 5G modem, *etc.*)*,* and one of the active antennas 444 is operable a low-performance modem 408 (*e.g.,* IOT modem, *etc.*)*.*

The distributed antenna system 440 and the low-performance modem 408 are configured to share the SIM 424 that is dynamically switched between the two modems 404, 408. By default, the SIM 424 is connected to the low-performance modem 408. Per software protocol, the SIM 424 is dynamically switched from the low-performance modem 408 to the distributed antenna system operating as a high-performance modem 404, *e.g.,* via remote SIM as used in BT-rSAP, *etc.*

The distributed antenna system 440 shown in FIG. 7 is but one example type of system that may include a combination of first and second (or high-performance and low-performance) modems (*e.g*., cellular modems, *etc.*)*.* Other exemplary embodiments may include combinations of first and second (or high-performance and low-performance) modems used in different systems, including other distributed antenna systems and other types of systems besides a distributed antenna system. Accordingly, the exemplary high-performance and low-performance modem combinations disclosed herein should not be limited to use with any one particular type of system.

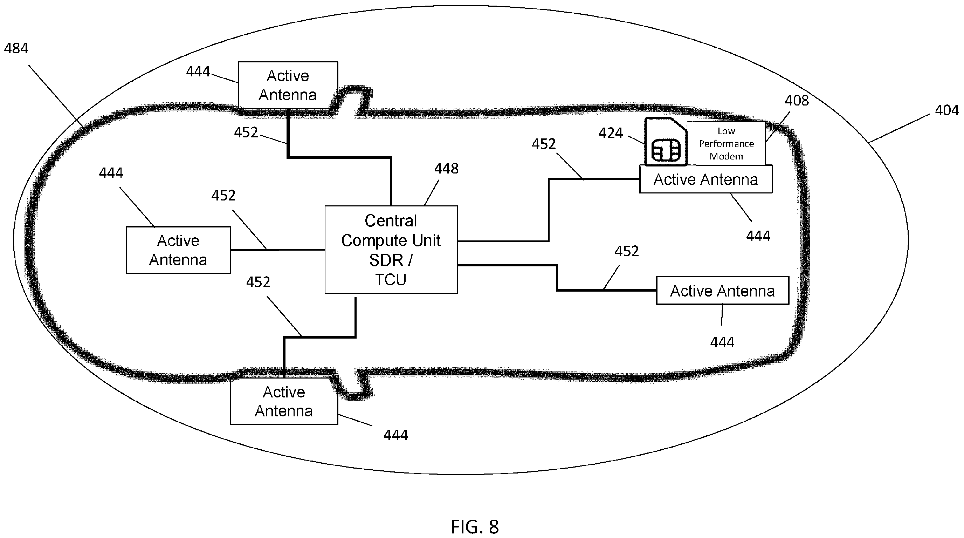

FIG. 8 illustrates the distributed antenna system 440 shown in FIG. 7 installed within an example vehicle 484. The antennas 444 are preferably distributed around the vehicle 484 such that the distributed antenna system 440 is operable for providing 180/360 degree hemispherical coverage.

As disclosed herein, the distributed antenna system 440 is configured to be operable as a first or high-performance modem 404 (*e.g.,* a 5G modem, *etc.*)*.* And one or more of the active antennas 444 of the distributed antenna system 440 (FIG. 4) is configured to be operable as and/or include a second or low-performance modem 408. Accordingly, the vehicle 484 is provided with a high-performance modem/low-performance modem combination in which the distributed antenna system 440 is operable as the high-performance modem 404 (*e.g.,* 5G modem, *etc.*) and at least one active antenna 444 is operable as a low-performance modem 408 (*e.g.*, IOT modem, *etc.*)*.*

The distributed antenna system 440 and the low-performance modem 408 are configured to share the SIM 424 that is dynamically switched between the two modems 404, 408. By default, the SIM 424 is connected to the low-performance modem 408. Per software protocol, the SIM 424 is dynamically switched from the low-performance modem 408 to the distributed antenna system 440 operating as a high-performance modem 404, *e.g.,* via remote SIM as used in BT-rSAP, *etc.*

As shown in FIG. 8, the vehicular distributed antenna system 440 is installed in the vehicle 484, such that the active antennas 444 are spaced apart from each other and distributed around the vehicle 444. The active antennas 444 may be respectively located towards a front of the vehicle (*e.g.,* on a vehicle hood, *etc.*)*,* towards a back of the vehicle (*e.g.,* on the vehicle trunk, *etc.*)*,* on top or upper portion of the vehicle (*e.g.,* on the vehicle roof or rear windshield, *etc.*)*,* and along the passenger and driver sides of the vehicle (*e.g.,* on the side view mirrors, *etc.*)*.* By distributing the active antennas 444 around the vehicle 484, the vehicular distributed antenna system 440 is operable for providing 180/360 degree hemispherical coverage, *e.g.,* including 5G eMBB / URLLC and V2X / MIMO, *etc.*

In exemplary embodiments, a system comprises a modem combination including at least: a first modem of a first modem type; and a second modem of a second modem type different than the first modem type, the second modem in communication with the first modem. The first and second modems are configured to share a shared subscriber identity or identification module (SIM). Additionally, or alternatively, the first modem includes a first dedicated SIM, and the second modem includes a second dedicated SIM.

In exemplary embodiments, the second modem may be configured to be continuously on with a power consumption and data rate lower than the first modem, and the first modem may be configured to be active only for use cases in which a higher power consumption is acceptable. Additionally, or alternatively, the first modem may be configured to enable vehicle to everything (V2X) support, and the second modem may be configured to trigger V2X capability of the first modem.

In exemplary embodiments, the modem combination may be configured such that data is collectable via the second modem. And the first modem may be enabled for data offloading after data collection via the second modem.

In exemplary embodiments, the second modem may be configured to trigger the first modem to take over for high data use cases. Additionally, or alternatively, the second modem may be configured to operable for receiving triggering instructions, via a remote device, to trigger the first modem.

In exemplary embodiments, the first and second modems may be configured to share one or more antennas. Additionally, or alternatively, the first modem may include one or more first antennas, and the second modem may include one or more second antennas separate or independent form the one or more first antennas.

In exemplary embodiments, the modem combination may be configured such that the shared SIM is dynamically switchable between the first and second modems. The modem combination may be configured such that the first and second modems share a physical SIM, an embedded SIM (eSIM), and/or an integrated SIM (iSIM).

In exemplary embodiments, the modem combination may be configured such that: the first modem includes a first dedicated physical SIM, embedded SIM (eSIM), and/or integrated SIM (iSIM); and the second modem may include a second dedicated physical SIM, embedded SIM (eSIM), or integrated SIM (iSIM).

In exemplary embodiments, the first modem may comprise a high-performance modem. And the second modem may comprise a low-performance modem. The high-performance modem may comprise a 5G modem. And the low-performance modem may comprise an Internet of Things (IOT) modem.

In exemplary embodiments, the first modem and the second modem may be collocated on a same substrate or package of a printed circuit board. Or the modem combination may comprises a multichip package or multichip module that includes the first modem and the second modem. Or the first modem and the second modem may be spaced apart from each other on a same printed circuit board, the first and second modems may be in communication with each other via a communication link operable for carrying information and/or providing a SIM interface between the first and second modems. Or the first modem may be on a first printed circuit board, the second modem may be on a second printed circuit board spaced apart from the first printed circuit board, and the first and second modems may be in communication with each other via a communication link operable for carrying information and/or providing a SIM interface between the first and second modems.

In exemplary embodiments, the system may comprises a distributed antenna system configured to be operable as the first modem. And at least one antenna of the distributed antenna system may be configured to be operable as and/or includes the second modem. In such exemplary embodiments, the second modem and the distributed antenna system operable as the first modem may be configured such that the shared SIM is dynamically switchable between the second modem and the distributed antenna system operable as the first modem. And the shared SIM may connected to the second modem by default and dynamically switchable to the distributed antenna system operable as the first modem according to a defined protocol. The distributed antenna system may include a central compute unit including one or more software defined radio (SDR) instances and a telematic control unit (TCU). Multiple active antennas may be in communication with the central compute unit. The multiple active antennas may be configured to be operable as the first modem implemented in the central compute unit. The first modem may have two or more multiple input multiple output (MIMO) antennas connected via analog radio frequency (RF) and/or via an analog to digital (A/D) digital link and digital to analog (D/A) connection. At least one of the multiple active antennas may be configured with or includes eCall Audio.

In exemplary embodiments, the system may comprises a vehicular distributed antenna system including an array of antennas distributed throughout a vehicle. The vehicular distributed antenna system may be configured to be operable as the first modem. And at least one antenna of the array of antennas may be configured to be operable as and/or includes the second modem.

In exemplary embodiments, the system may comprises an array of antennas configured to be operable as the first modem. And at least one antenna of the array of antennas may be configured to be operable as and/or includes the second modem.

In exemplary embodiments, the second modem may be configured to be operable for supporting audio for eCall use cases.

In exemplary embodiments, the system may includes a plurality of first modems of the first modem type; and/or a plurality of second modems of the second modem type different than the first modem type.

In exemplary embodiments, the first and second modems may be configured such that the modem combination visually appears to be a single modem from the outside.

The disclosure provided herein describes features in terms of preferred and exemplary embodiments thereof. Numerous other embodiments, modifications and variations within the scope of the appended claims will occur to persons of ordinary skill in the art from a review of this disclosure.

## Claims

1. A system comprising a modem combination including at least:
a first modem of a first modem type; and
a second modem of a second modem type different than the first modem type, the second modem in communication with the first modem;
wherein:
the first and second modems are configured to share a shared subscriber identity or identification module (SIM); and/or
the first modem includes a first dedicated SIM, and the second modem includes a second dedicated SIM.

2. The system of claim 1, wherein:
the second modem is configured to be continuously on with a power consumption and data rate lower than the first modem, and the first modem is configured to be active only for use cases in which a higher power consumption is acceptable; and/or
the first modem is configured to enable vehicle to everything (V2X ) support, and the second modem is configured to trigger V2X capability of the first modem.

3. The system of any one of the preceding claims, wherein the modem combination is configured such that:
data is collectable via the second modem; and
the first modem is enabled for data offloading after data collection via the second modem.

4. The system of any one of the preceding claims, wherein:
the second modem is configured to trigger the first modem to take over for high data use cases; and/or
the second modem is configured to operable for receiving triggering instructions, via a remote device, to trigger the first modem.

5. The system of any one of the preceding claims, wherein:
the first and second modems are configured to share one or more antennas; and/or
the first modem includes one or more first antennas, and the second modem includes one or more second antennas separate or independent form the one or more first antennas.

6. The system of any one of the preceding claims, wherein the modem combination is configured such that:
the first and second modems share a physical SIM, an embedded SIM (eSIM), and/or an integrated SIM (iSIM) that is dynamically switchable between the first and second modems; and/or
the first modem includes a first dedicated physical SIM, embedded SIM (eSIM), and/or integrated SIM (iSIM); and the second modem includes a second dedicated physical SIM, embedded SIM (eSIM), or integrated SIM (iSIM).

7. The system of any one of the preceding claims, wherein:
the first modem comprises a high-performance modem; and
the second modem comprises a low-performance modem.

8. The system of claim 7, wherein:
the high-performance modem comprises a 5G modem; and
the low-performance modem comprises an Internet of Things (IOT) modem.

9. The system of any one of the preceding claims, wherein the second modem is configured to be operable for supporting audio for eCall use cases.

10. The system of any one of the preceding claims, wherein:
the first modem and the second modem are collocated on a same substrate or package of a printed circuit board; or
the modem combination comprises a multichip package or multichip module that includes the first modem and the second modem; or
the first modem and the second modem are spaced apart from each other on a same printed circuit board, the first and second modems are in communication with each other via a communication link operable for carrying information and/or providing a SIM interface between the first and second modems; or
the first modem is on a first printed circuit board, the second modem is on a second printed circuit board spaced apart from the first printed circuit board, and the first and second modems are in communication with each other via a communication link operable for carrying information and/or providing a SIM interface between the first and second modems.

11. The system of any one of the preceding claims, wherein the system includes:
a plurality of first modems of the first modem type; and/or
a plurality of second modems of the second modem type different than the first modem type; and/or
the first and second modems are configured such that the modem combination visually appears to be a single modem from the outside.

12. The system of any one of claims 1 to 9, wherein:
the system comprises a vehicular distributed antenna system including an array of antennas distributed throughout a vehicle, the vehicular distributed antenna system configured to be operable as the first modem; and
at least one antenna of the array of antennas is configured to be operable as and/or includes the second modem.

13. The system of claim 12, wherein:
the second modem and the vehicular distributed antenna system operable as the first modem are configured such that the shared SIM is dynamically switchable between the second modem and the vehicular distributed antenna system operable as the first modem; and
the shared SIM is connected to the second modem by default and dynamically switchable to the vehicular distributed antenna system operable as the first modem according to a defined protocol.

14. The system of claim 12 or 13, wherein the vehicular distributed antenna system includes:
a central compute unit including one or more software defined radio (SDR) instances and a telematic control unit (TCU); and
multiple active antennas in communication with the central compute unit, the multiple active antennas configured to be operable as the first modem implemented in the central compute unit, the first modem having two or more multiple input multiple output (MIMO) antennas connected via analog radio frequency (RF) and/or via an analog to digital (A/D) digital link and digital to analog (D/A) connection.

15. The system of claim 14, wherein at least one of the multiple active antennas is configured with or includes eCall Audio.
